# FASCICULE DE BREVET EUROPEEN

(11) **EP 1 601 170 B1**
(45) Date de publication et mention de la délivrance du brevet: **03.12.2008**
(21) Numéro de dépôt: 04291357.4
(22) Date de dépôt: 28.05.2004
(51) Int. Cl.: H04M 1/56, H04M 3/533

(54) **Procédé d'établissement d'une liaison d'échange de données entre une messagerie vocale et un terminal appelant**
Verfahren zum Herstellen einer Datenverbindung zwischen einem Voicemail-System und einem rufenden Endgerät
Method of establishing a data connection between a voicemail system and a calling terminal

(43) Date de publication de la demande: 30.11.2005
(73) Titulaire: FRANCE TELECOM, 75015 Paris (FR)
(72) Inventeur: Maitret, Bénédicte, 75017 Paris (FR); Guisnet, Bertrand, 92130 Issy les Moulineaux (FR)
(74) Mandataire: Loisel, Bertrand

(56) Documents cités:
- US-A1- 2003 169 865
- US-B1- 6 535 585
- "Integrated Services Digital Network (ISDN); Connected Line Identification Presentation (COLP) supplementary service Service description; ETS 300 094" ETSI STANDARDS, EUROPEAN TELECOMMUNICATIONS STANDARDS INSTITUTE, SOPHIA-ANTIPO, FR, vol. NA-1;SPAN-11, janvier 1992 (1992-01), XP014011986 ISSN: 0000-0001
- "Integrated Services Digital Network (ISDN); Connected Line Identification Presentation (COLP) and Connected Line Identification Restriction (COLR) supplementary services Functional capabilities and information flows; ETS 300 096" ETSI STANDARDS, EUROPEAN TELECOMMUNICATIONS STANDARDS INSTITUTE, SOPHIA-ANTIPO, FR, vol. SP-1, mai 1992 (1992-05), XP014011988 ISSN: 0000-0001

## Description

La présente invention concerne un procédé de gestion d'appels sur un réseau de téléphonie ainsi qu'un système correspondant.

Il existe des procédés de gestion d'appels sur des réseaux de téléphonie qui comprennent classiquement l'émission d'un appel par un terminal vers un autre et le routage de cet appel vers une messagerie vocale, notamment lorsque le terminal appelé n'est pas disponible ou rejette l'appel.

Une liaison est alors établie entre le terminal appelant et un serveur de messagerie vocale ou directement la messagerie vocale du terminal appelé.

Cette liaison permet principalement l'enregistrement d'un message vocal par le terminal appelant. Ce message vocal est consultable ultérieurement notamment à partir du terminal indisponible au moment de l'appel.

La liaison entre le terminal appelant et la messagerie vocale permet également la transmission, à partir du terminal appelant, de commandes de pilotage de la messagerie vocale. Par exemple, il existe des procédés dans lesquels la transmission de codes multifréquences, dits « DTMF » pour Dual Tone Multi-Frequencies, permet l'accès à d'autres fonctions de la messagerie vocale.

De manière classique, le terminal appelant dispose en outre d'un journal d'appel pour l'enregistrement d'informations relatives aux appels qu'il a émis.

Les informations qui sont enregistrées sont celles disponibles au niveau de ce terminal appelant et comprennent, par exemple, la date et le destinataire de l'appel.

Le document D1 US-B-6 535 5851 (HANSON JOEL ET AL) décrit un procédé de notification d'écoute d'un message dans lequel, dans le cas où un terminal appelant a laissé un message vocal à un terminal appelé auprès d'une messagerie vocale, celle-ci envoie au terminal appelant un signal pour lui indiquer que le terminal appelé a écouté son message.

Le document D2 « Integrated Services Digital Network (ISDN) ; Connected Ligne Identification Presentation (COLP) supplementary service Service description ; ETS 300 094 » ETSI STANDARDS, EUROPEAN TELECOMMUNICATIONS STANDARDS INSTITUTE décrit un service de présentation à un terminal appelant du numéro connecté.

Cependant, aucun élément existant ne permet de disposer au niveau du terminal appelant d'informations plus complètes relatives à l'appel, telles que par exemple le fait que l'appel ait été orienté vers une messagerie vocale.

Le but de la présente invention est de résoudre ce problème en définissant un procédé de gestion d'appels permettant d'obtenir, au niveau du terminal appelant, des informations plus complètes par rapport aux appels émis.

A cet effet, l'invention a pour objet un procédé selon la revendication 1.

Grâce à ce procédé, le téléphone appelant dispose d'informations supplémentaires relatives à l'appel émis telles que par exemple, le fait que l'appel ait été orienté vers une messagerie.

D'autres caractéristiques de ce procédé sont en outre définies dans les revendications dépendantes.

L'invention a également pour objet un terminal téléphonique selon la revendication 10 et système selon la revendication 11 comprenant un terminal de téléphonie et une messagerie vocale.

L'invention sera mieux comprise à la lecture de la description qui va suivre, donnée uniquement à titre d'exemple et faite en se référant aux dessins annexés, sur lesquels :
- la Fig.1 est un schéma synoptique d'un système de téléphonie dans lequel est mis en oeuvre le procédé de l'invention ; et
- la Fig.2 est un organigramme du procédé de l'invention.

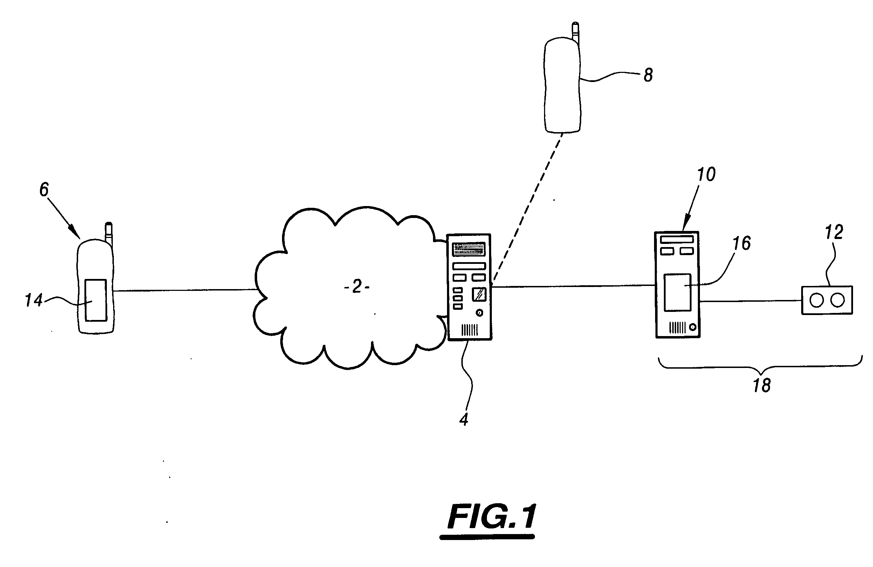

Le système représenté sur la figure 1 est un système de téléphonie comprenant un réseau de téléphonie 2 tel qu'un réseau de téléphonie mobile et/ou un réseau public commuté et/ou un réseau de téléphonie sur IP.

Ce réseau téléphonique 2 est constitué d'un certain nombre d'équipements et notamment d'équipements de routage tels que l'équipement 4.

Une pluralité de terminaux téléphoniques de différents types sont accessibles les uns par les autres au travers de ce réseau 2, tels que les téléphones mobiles 6 et 8.

De plus, le système comprend une pluralité de serveurs de messagerie vocale tels que le serveur de messagerie vocale 10. Chaque serveur de messagerie vocale gère une pluralité de boites vocales, chacune associée à un téléphone. En particulier, le serveur 10 gère la boite vocale 12 qui est associée au téléphone 8. En variante, la boite vocale est directement gérée par le terminal téléphonique qui fait office de répondeur comme dans le cas d'un téléphone-répondeur relié au réseau public commuté.

Dans le mode de réalisation décrit, le téléphone mobile 6 comprend des moyens améliorés 14 de gestion et de réception d'informations relatives aux appels émis.

Par exemple, ces moyens 14 sont formés de logiciels spécifiques tels que des logiciels dits « JAVA » ou encore de composants de logiciels, tels que des composants dits « API », exécutables par l'unité de contrôle du téléphone 6.

Parallèlement, le serveur de messagerie 10 comporte des moyens 16 d'émission d'informations relatives aux appels qu'il reçoit, formés également de logiciels ou composants de logiciels spécifiques, ou de tout autre élément approprié.

A des fins de clarté, le serveur de messagerie 10 et la boite vocale 12 seront désignés plus loin par le terme générique « messagerie vocale » sous la référence 18.

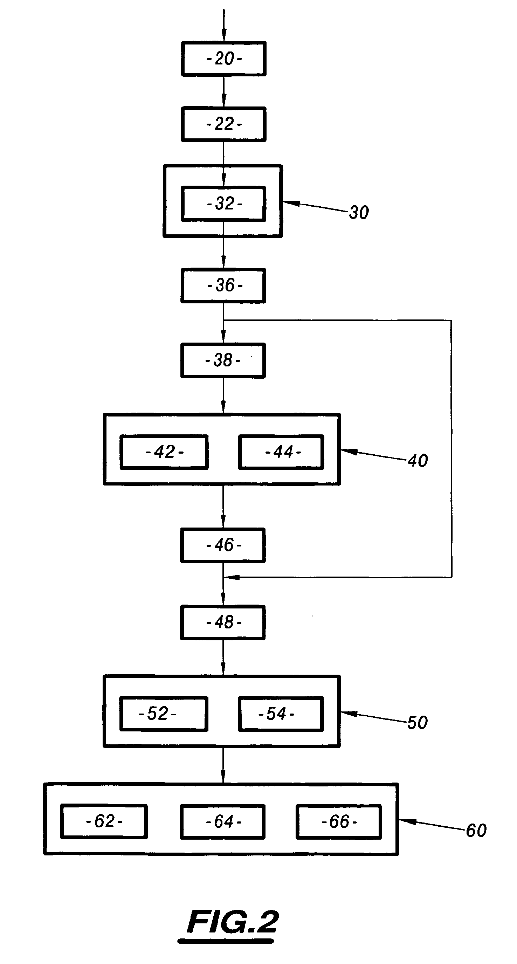

En référence à la figure 2, on va maintenant décrire le fonctionnement de ce système lors de l'émission d'un appel par le téléphone 6 à destination du téléphone 8. Le téléphone 6 est désigné « téléphone appelant » et le téléphone 8 est désigné « téléphone appelé ».

Ce procédé débute par une étape 20 d'émission d'un appel par le téléphone appelant 6 vers le téléphone appelé 8.

L'étape 20 est suivie d'une étape 22 de routage de cet appel vers la messagerie vocale 18 réalisée par l'équipement de routage 4. Cette étape 22 de routage est réalisée de manière classique, par exemple, dans le cas où le téléphone appelé 8 est indisponible, soit parce-qu'il est éteint, soit parce-qu'il est hors d'une zone de couverture, ou encore dans le cas où le téléphone appelé 8 rejette l'appel entrant.

De telles étapes 20 et 22 sont classiques et connues de l'état de l'art, de sorte qu'elles ne seront pas décrites plus en détail.

Le procédé comporte ensuite une étape 30 d'établissement d'une liaison d'échange de données entre le téléphone appelant 6 et la messagerie vocale 18.

Dans le mode de réalisation décrit, cette étape 30 comporte une sous-étape 32 d'établissement d'une communication bidirectionnelle adaptée pour la transmission d'informations de manière asynchrone et, notamment pour la transmission d'informations vocales entre le téléphone 6 et la messagerie vocale 18.

Une telle sous-étape 32 est réalisée de manière classique à l'issue de l'échange d'un train de sonneries, puis d'une prise de ligne.

A l'issue de cette étape du procédé, une communication bidirectionnelle entre le téléphone appelant 6 et la messagerie vocale 18 est donc établie.

Le procédé comporte ensuite une étape 36 de transmission, par la messagerie vocale 18 et vers le téléphone appelant 6, d'informations liées à l'appel.

Plus particulièrement, cette étape 36 permet la transmission par la messagerie vocale 18 vers le terminal appelant 6, d'informations relatives au routage de l'appel par la transmission au terminal 6 de l'identité de la messagerie vocale 18 recevant l'appel.

La réalisation d'une telle étape 36 de transmission d'informations par la messagerie vocale 18 vers le téléphone appelant 6 permet de rendre disponible, au niveau de ce terminal 6, des informations supplémentaires relatives à l'appel.

L'émission de ces informations est réalisée par les moyens 16 du serveur de messagerie 10, qui les combinent aux autres informations circulant sur la liaison établie avec le téléphone appelant 6. Le téléphone 6 reçoit et décode ces informations grâce aux moyens logiciels spécifiques 14.

Dans le mode de réalisation décrit, cette transmission d'informations est réalisée par l'envoi de codes DTMF, c'est-à-dire des signaux d'informations transmis sous la forme d'impulsions de fréquences codées.

Dans le cas où l'utilisateur du téléphone appelant 6 décide d'enregistrer un message sur la messagerie vocale 18, l'étape 36 est suivie d'une seconde étape 38 de transmission, par la messagerie vocale 18 et vers le téléphone appelant 6, d'informations relatives à l'appel et en particulier au début de l'enregistrement. Ainsi, le procédé comprend une pluralité d'étapes de transmission d'informations, séparées dans le temps.

La seconde étape 38 de transmission d'informations relatives à l'appel est réalisée d'une manière similaire à la première étape 36.

L'étape 38 est suivie d'une étape 40 d'utilisation par le téléphone appelant 6 des informations transmises par la messagerie vocale 18.

Dans le mode de réalisation décrit, cette étape 40 comporte une sous-étape 42 de déclenchement d'un compteur de temps et une sous-étape 44 de déclenchement d'un enregistrement vocal, localement sur le terminal appelant 6.

L'étape 40 est réalisée grâce à la réception et au décodage des informations de début d'enregistrement d'un message vocal, transmises par la messagerie vocale 18 lors de l'étape 38.

L'étape 40 est suivie d'une étape 46 d'enregistrement d'un message vocal par le terminal appelant 6 sur la messagerie vocale 18, réalisée de manière classique.

L'étape 46 est suivie d'une étape 48 d'interruption de la liaison entre le téléphone appelant 6 et la messagerie vocale 18, résultant, dans l'exemple, du raccrochement du téléphone appelant 6.

Dans le cas où, à l'issue de l'étape 36, l'utilisateur du téléphone appelant 6 décide de ne pas laisser de message vocal, le procédé se rend directement de l'étape 36 à l'étape 48.

Cette étape 48 est suivie d'une étape 50 d'interruption des actions liées à la communication qui comprend une sous-étape 52 d'arrêt du compteur de temps déclenché lors de la sous-étape 42 et une sous-étape 54 d'arrêt de l'enregistrement vocal local débuté lors de la sous-étape 44.

Cette étape 50 est suivie d'une seconde étape 60 d'utilisation par le terminal appelant 6 des informations transmises par la messagerie vocale 18.

Cette étape 60 comprend plus particulièrement une sous-étape 62 d'enregistrement dans le journal du terminal appelant 6, des informations relatives à l'appel et notamment de la date et du destinataire de l'appel, mais également du fait que l'appel a été routé vers une messagerie vocale, et de la durée du message vocal enregistré.

Ainsi, la sous-étape 62 permet l'enregistrement, dans le journal local du téléphone appelant 6, d'informations relatives à l'appel collectées localement et d'informations supplémentaires relatives à l'appel, transmises par la messagerie vocale 18.

La détection du routage de l'appel vers la messagerie vocale 18, par le téléphone appelant 6 grâce aux informations reçues transmises par la messagerie 18, permet également le déclenchement d'autres actions locales pour proposer à l'utilisateur du téléphone appelant 6 d'autres modes de communication.

Notamment, l'étape 60 comporte également une sous-étape 64 de génération d'alertes correspondant, par exemple, à la création par le terminal appelant 6 d'une alerte pour entraîner le rappel automatique après un temps prédéterminé, la validation d'une telle alerte étant conditionnée par l'accord de l'utilisateur.

En outre, l'étape 60 comprend également une étape 66 de préparation d'un message écrit court, dit « SMS », formaté par avance et destiné au terminal appelé 8.

Ainsi, la transmission par la messagerie vocale d'informations relatives à son identité, c'est-à-dire au fait que l'appel ait été routé, à l'horodatage et à la durée du message, sont envoyés par la messagerie vocale 8 vers le téléphone appelant 6.

Ce téléphone appelant 6 reçoit ces informations et, dans le mode de réalisation décrit, les utilise soit pour les enregistrer dans son journal d'appels, soit pour déclencher des actions locales, telles que la mise en oeuvre d'un enregistrement vocal, la création d'une alerte ou encore la préparation d'un message écrit court.

De plus, le procédé comprend plusieurs étapes d'utilisation des informations transmises par la messagerie vocale 18 vers le téléphone 6, séparées dans le temps.

Le procédé de l'invention permet donc au téléphone appelant 6, de recevoir à différents moments, des informations complètes relatives à l'appel émis et notamment relatives au routage de cet appel vers la messagerie vocale. Le terminal appelant 6 dispose ensuite de la possibilité d'utiliser ces informations de toutes manières appropriées et n'importe quand.

Bien entendu, d'autres modes de réalisation peuvent être envisagés.

Dans une première variante, l'étape 30 d'établissement d'une liaison entre le terminal appelant 6 et la messagerie vocale 18, comprend une sous-étape d'établissement d'une communication bidirectionnelle asynchrone destinée à des échanges d'informations vocales et une sous-étape d'établissement d'une communication spécifique à la transmission d'informations entre la messagerie vocale et le terminal appelant.

Par exemple, une telle communication spécifique est unidirectionnelle et consiste en la transmission d'un train de sonnerie propre à la messagerie vocale, avant la prise de ligne.

Ainsi, la transmission d'informations de la messagerie vocale vers le téléphone appelant a lieu avant l'établissement d'une communication vocale permettant ainsi d'informer le téléphone appelant de la redirection de l'appel vers une messagerie vocale avant la prise de ligne.

Dans d'autres modes de réalisation, la communication entre la messagerie vocale et le téléphone appelant se fait grâce à un dialogue utilisant des messages écrits courts ou tout autre protocole de communication adapté.

Dans encore une autre variante, la messagerie vocale transmet au téléphone appelant, dès la fin de l'enregistrement du message vocal, un fichier son contenant l'intégralité du message vocal enregistré, c'est-à-dire des informations relatives au contenu du message. Par exemple, cette transmission se fait sous la forme de la transmission d'un message multimédia dit « MMS ».

Par ailleurs, d'autres types de téléphone et d'équipement téléphonique que ceux décrits peuvent être mis en oeuvre, notamment, des téléphones filaires ou tout autre équipement adapté pour les communications vocales.

## Revendications

1. Procédé de gestion d'appels sur un réseau de téléphonie (2), comprenant :
- une étape (20) d'émission d'un appel par un terminal téléphonique appelant (6) vers un autre équipement (8) du réseau (2) ;
- une étape d'enregistrement dans un journal d'appels d'informations relatives à l'appel émis et collectées localement ;
- une étape (22) de routage de cet appel vers une messagerie vocale (18) déterminée; et
- une étape (30) d'établissement d'une liaison d'échange de données entre ledit terminal appelant (6) et ladite messagerie vocale (18),
procédé **caractérisé en ce qu'**il comprend en outre :
- au moins une étape (36, 38) de transmission d'informations liées à l'appel par ladite messagerie vocale (18) et vers ledit terminal appelant (6) ; et
- au moins une étape (40, 60) d'utilisation desdites informations transmises par ledit terminal appelant (6) consistant à enregistrer lesdites informations transmises par la messagerie vocale dans le journal d'appels du terminal appelant, lesdites informations transmises complétant lesdites informations relatives à l'appel émis et collectées localement.

2. Procédé selon la revendication 1, **caractérisé en ce que** ladite étape (30) d'établissement d'une liaison d'échange de données comprend une sous-étape (32) d'établissement d'une communication bidirectionnelle entre ledit terminal appelant (6) et ladite messagerie vocale (18), ladite au moins une étape (36, 38) de transmission d'informations relatives à l'appel étant réalisée au travers de ladite communication bidirectionnelle.

3. Procédé selon la revendication 1, **caractérisé en ce que** ladite étape (30) d'établissement d'une liaison d'échange de données comprend une sous-étape d'établissement d'une communication spécifique d'échange d'informations de ladite messagerie vocale (18) vers ledit téléphone appelant (6), ladite au moins une étape de transmission d'informations étant réalisée au travers de cette communication spécifique.

4. Procédé selon l'une quelconque des revendications 1 à 3, **caractérisé en ce qu'**il comprend une pluralité d'étapes de transmission d'informations liées à l'appel par ladite messagerie vocale (18) et vers ledit terminal appelant (6), séparées dans le temps.

5. Procédé selon l'une quelconque des revendications 1 à 4, **caractérisé en ce qu'**il comprend une pluralité d'étapes d'utilisation des informations liées à l'appel transmises par ladite messagerie vocale (18) et vers ledit terminal appelant (6), séparées dans le temps.

6. Procédé selon l'une quelconque des revendications 1 à 5, **caractérisé en ce que** lesdites informations transmises par ladite messagerie vocale (18) vers ledit terminal appelant (6), comprennent au moins l'une des informations suivantes :
- des informations d'identification de ladite messagerie vocale (18) ;
- des informations d'horodatage ;
- des informations de durée ; et
- des informations relatives au contenu d'un message vocal enregistré sur la messagerie vocale (18).

7. Procédé selon l'une quelconque des revendications 1 à 6, **caractérisé en ce que** ladite au moins une étape (60) d'utilisation desdites informations transmises comprend une sous-étape (62) d'enregistrement, au niveau du terminal appelant (6), de toute ou partie de ces informations.

8. Procédé selon l'une quelconque des revendications 1 à 7, **caractérisé en ce que** ladite au moins une étape d'utilisation comprend une sous-étape de déclenchement d'une action locale sur ledit terminal appelant (6), en fonction desdites informations.

9. Procédé selon la revendication 8, **caractérisé en ce que** ladite étape de déclenchement d'une action locale comprend au moins l'une des sous-étapes parmi :
- une sous-étape (64) de création d'une alerte ;
- une sous-étape (44) de mise en oeuvre d'un enregistrement vocal ;
- une sous-étape (42) de déclenchement d'un compteur ; et
- une sous-étape (66) de création d'un message formaté.

10. Terminal téléphonique comprenant des moyens (14) de gestion et de réception d'informations relatives aux appels émis agencés pour enregistrer dans un journal d'appels des informations relatives à un appel émis et collectées localement, **caractérisé en ce que** les moyens de gestion et de réception sont agencés pour enregistrer des informations liées à l'appel, transmises par une messagerie vocale, dans le journal d'appels, lesdites informations transmises par la messagerie vocale complétant lesdites informations relatives à l'appel et collectées localement.

11. Système de téléphonie comprenant :
- un réseau de téléphonie (2,4),
- une messagerie vocale (18) comprenant des moyens (16) de transmission d'informations relatives aux appels qu'elle reçoit, et
- au moins un terminal téléphonique (6) selon la revendication 10, relié à la messagerie vocale (18) au travers du réseau de téléphonie (2,4).

## Claims

1. Method for managing calls on a telephone network (2), comprising:
- a step (20) of sending a call by a calling telephone terminal (6) to another item of equipment (8) of the network (2);
- a step of recording, in a call log, locally collected information relating to the call sent;
- a step (22) of routing this call to a determined voicemail facility (18); and
- a step (30) of establishing a data exchange link between the said calling terminal (6) and the said voicemail facility (18),
method **characterized in that** it furthermore comprises:
- at least one step (36, 38) of transmitting call-related information by the said voicemail facility (18) and to the said calling terminal (6); and
- at least one step (40, 60) of using the said information transmitted by the said calling terminal (6) consisting in recording the said information transmitted by the voicemail facility in the call log of the calling terminal as a supplement to the said locally collected information relating to the call sent.

2. Method according to Claim 1, **characterized in that** the said step (30) of establishing a data exchange link comprises a sub-step (32) of establishing a bidirectional communication between the said calling terminal (6) and the said voicemail facility (18), the said at least one step (36, 38) of transmitting information relating to the call being carried out through the said bidirectional communication.

3. Method according to Claim 1, **characterized in that** the said step (30) of establishing a data exchange link comprises a sub-step of establishing a specific communication for exchanging information from the said voicemail facility (18) to the said calling telephone (6), the said at least one step of transmitting information being carried out through this specific communication.

4. Method according to any one of Claims 1 to 3, **characterized in that** it comprises a plurality of steps of transmitting call-related information by the said voicemail facility (18) and to the said calling terminal (6), separated over time.

5. Method according to any one of Claims 1 to 4, **characterized in that** it comprises a plurality of steps of using the call-related information transmitted by the said voicemail facility (18) and to the said calling terminal (6), separated over time.

6. Method according to any one of Claims 1 to 5, **characterized in that** the said information transmitted by the said voicemail facility (18) to the said calling terminal (6), comprises at least one of the following items of information:
- information identifying the said voicemail facility (18);
- time-stamping information;
- duration information; and
- information relating to the content of a voicemail recorded on the voicemail facility (18).

7. Method according to any one of Claims 1 to 6, **characterized in that** the said at least one step (60) of using the said transmitted information comprises a sub-step (62) of recording, at the level of the calling terminal (6), all or some of this information.

8. Method according to any one of Claims 1 to 7, **characterized in that** the said at least one using step comprises a sub-step of triggering a local action on the said calling terminal (6), as a function of the said information.

9. Method according to Claim 8, **characterized in that** the said step of triggering a local action comprises at least one of the sub-steps from among:
- a sub-step (64) of creating an alert;
- a sub-step (44) of implementing a voice recording;
- a sub-step (42) of triggering a counter; and
- a sub-step (66) of creating a formatted message.

10. Telephone terminal comprising means (14) for managing and receiving information relating to the calls sent designed to record, in a call log, locally collected information relating to a call sent, **characterized in that** the management and reception means are designed to record call-related information, transmitted by a voicemail facility, in the call log, as a supplement to the said locally collected information relating to the call.

11. Telephone system comprising:
- a telephone network (2,4),
- a voicemail facility (18) comprising means (16) for transmitting information relating to the calls that it receives, and
- at least one telephone terminal (6) according to Claim 10, linked to the voicemail facility (18) through the telephone network (2,4).

## Patentansprüche

1. Verfahren zur Verwaltung von Anrufen in einem Telefonienetz (2), das aufweist:
- einen Schritt (20) des Sendens eines Anrufs von einem anrufenden Telefonie-Endgerät (6) zu einem anderen Gerät (8) des Netzes (2);
- einen Schritt des Aufzeichnens in einem Anrufjournal von lokal gesammelten Informationen bezüglich des gesendeten Anrufs;
- einen Schritt (22) des Routens dieses Anrufs zu einem bestimmten Sprachspeicherdienst (18); und
- einen Schritt (30) des Aufbaus einer Datenaustauschverbindung zwischen dem anrufenden Endgerät (6) und dem Sprachspeicherdienst (18),
wobei das Verfahren **dadurch gekennzeichnet ist, dass** es außerdem aufweist:
- mindestens einen Schritt (36, 38) der Übertragung von mit dem Anruf verbundenen Informationen durch den Sprachspeicherdienst (18) und zum anrufenden Endgerät (6); und
- mindestens einen Schritt (40, 60) der Verwendung der übertragenen Informationen durch das anrufende Endgerät (6), der darin besteht, die von dem Sprachspeicherdienst übertragenen Informationen im Anrufjournal des anrufenden Endgeräts zusätzlich zu den lokal gesammelten Informationen bezüglich des gesendeten Anrufs aufzuzeichnen.

2. Verfahren nach Anspruch 1, **dadurch gekennzeichnet, dass** der Schritt (30) des Aufbaus einer Datenaustauschverbindung einen Unterschritt (32) des Aufbaus einer Zweiwegkommunikation zwischen dem anrufenden Endgerät (6) und dem Sprachspeicherdienst (18) aufweist, wobei der mindestens eine Schritt (36, 38) der Übertragung von Informationen bezüglich des Anrufs über die Zweiwegkommunikation durchgeführt wird.

3. Verfahren nach Anspruch 1, **dadurch gekennzeichnet, dass** der Schritt (30) des Aufbaus einer Datenaustauschverbindung einen Unterschritt des Aufbaus einer spezifischen Informationsaustausch-Kommunikation des Sprachspeicherdiensts (18) zum anrufenden Telefon (6) aufweist, wobei der mindestens eine Schritt der Informationsübertragung über diese spezifische Kommunikation durchgeführt wird.

4. Verfahren nach einem der Ansprüche 1 bis 3, **dadurch gekennzeichnet, dass** es mehrere zeitlich getrennte Schritte der Übertragung von mit dem Anruf verbundenen Informationen durch den Sprachspeicherdienst (18) und zum anrufenden Endgerät (6) aufweist.

5. Verfahren nach einem der Ansprüche 1 bis 4, **dadurch gekennzeichnet, dass** es mehrere zeitlich getrennte Schritte der Verwendung der mit dem Anruf verbundenen Informationen, die vom Sprachspeicherdienst (18) und zum anrufenden Endgerät (6) übertragen werden, aufweist.

6. Verfahren nach einem der Ansprüche 1 bis 5, **dadurch gekennzeichnet, dass** die vom Sprachspeicherdienst (18) zum anrufenden Endgerät (6) übertragenen Informationen mindestens eine der folgenden Informationen enthalten:
- Identifikationsinformationen des Sprachspeicherdiensts (18),
- Datums- und Uhrzeitangabe-Informationen,
- Dauer-Informationen und
- Informationen bezüglich des Inhalts einer im Sprachspeicherdienst (18) aufgezeichneten Voicemail.

7. Verfahren nach einem der Ansprüche 1 bis 6, **dadurch gekennzeichnet, dass** der mindestens eine Schritt (60) der Verwendung der übertragenen Informationen einen Unterschritt (62) der Aufzeichnung, auf der Ebene des anrufenden Endgeräts (6), aller oder eines Teils dieser Informationen aufweist.

8. Verfahren nach einem der Ansprüche 1 bis 7, **dadurch gekennzeichnet, dass** der mindestens eine Verwendungsschritt einen Unterschritt des Auslösens einer lokalen Aktion im anrufenden Endgerät (6) in Abhängigkeit von diesen Informationen aufweist.

9. Verfahren nach Anspruch 8, **dadurch gekennzeichnet, dass** der Schritt des Auslösens einer lokalen Aktion mindestens einen der folgenden Unterschritte aufweist:
- einen Unterschritt (64) der Erzeugung einer Alarmanzeige,
- einen Unterschritt (44) der Anwendung einer Sprachaufzeichnung,
- einen Unterschritt (42) des Auslösens eines Zählers; und
- einen Unterschritt (66) der Erzeugung einer formatierten Mitteilung.

10. Telefon-Endgerät, das Mittel (14) zur Verwaltung und zum Empfang von Informationen bezüglich der gesendeten Anrufe aufweist, die eingerichtet sind, um in einem Anrufjournal lokal gesammelte Informationen bezüglich eines gesendeten Anrufs aufzuzeichnen, **dadurch gekennzeichnet, dass** die Verwaltungs- und Empfangsmittel eingerichtet sind, um mit dem Anruf verbundenen Informationen, die von einem Sprachspeicherdienst übertragen werden, in dem Anrufjournal zusätzlich zu den lokal gesammelten Informationen bezüglich des Anrufs aufzuzeichnen.

11. Telefoniesystem, das aufweist:
- ein Telefonienetz (2, 4),
- einen Sprachspeicherdienst (18), der Mittel (16) zur Übertragung von Informationen bezüglich der von ihm empfangenen Anrufe aufweist, und
- mindestens ein Telefon-Endgerät (6) nach Anspruch 10, das über das Telefonienetz (2, 4) mit dem Sprachspeicherdienst (18) verbunden ist.
